# EUROPÄISCHE PATENTANMELDUNG

(11) **EP 1 215 672 A1**
(43) Veröffentlichungstag der Anmeldung: **19.06.2002**
(21) Anmeldenummer: 01125170.9
(22) Anmeldetag: 23.10.2001
(51) Int. Cl.: G11B 11/00

(54) **Verfahren zur Durchführung eines interaktiven Lernverfahrens**

(30) Priorität: 13.12.2000 EP 00127342
(71) Anmelder: Färber ,Markus, 85521 Ottobrunn (DE)
(72) Erfinder: Färber ,Markus, 85521 Ottobrunn (DE)
(74) Vertreter: Becker Kurig Straus

(57) **Zusammenfassung**

Das Verfahren umfasst die Durchführung eines interaktiven Lernverfahrens mit Gewinnoption mit Hilfe eines elektronischen Mediums. Der Benutzer baut eine Verbindung zu einer Seite/ Domain eines Betreibers des Lernverfahrens auf. Dann führt der Benutzer einen Anmeldevorgang durch. Daraufhin wird dem Benutzer eine personalisierte Homepage dargestellt. Danach kann der Benutzer Tickets für sein virtuelles Konto erwerben. Danach nimmt der Benutzer, nach Entrichten einer Gebühr mittels des virtuellen Kontos, an einem zeitlich begrenzten Frage/Antwort-Lernverfahren teil. Dabei wird der Verlauf des Lernverfahrens protokolliert. Nach Beendigung eines vorbestimmten Zeitraumes werden alle teilnehmenden Benutzer bewertet, eine Rangliste wird erstellt und gespeichert. Schließlich wird der Gewinn entsprechend der Rangliste an die Benutzer ausgeschüttet.

## Beschreibung

Die Erfindung betrifft ein Verfahren zur Durchführung eines interaktiven Lernverfahrens ggf. mit Gewinnoption.

Lernverfahren mit Gewinnoption können in vielerlei Formen durchgeführt werden. Eine Möglichkeit, ein Lernverfahren mit Gewinnoption durchzuführen, stellt ein Preisausschreiben dar, bei dem die Teilnehmer durch den Preis dazu motiviert werden, eigene Fähigkeiten und eigenes Wissen zu vertiefen.

Bei Preisausschreiben hat der Teilnehmer zwar eine Gewinnchance, er kann aber ebenso wie beim Glücksspiel keinen Einfluss auf die Ermittlung des Gewinners nehmen. Zudem kann der Teilnehmer dabei nicht entscheiden, wann das Preisausschreiben stattfindet. Solche Preisausschreiben sind zum Teil auch mit der Beantwortung einzelner Fragen verbunden. Dabei handelt es aber um eine Teilnahmevoraussetzung, ohne die an dem Preisausschreiben nicht teilgenommen werden kann. Die Ermittlung des Gewinners erfolgt in der Regel nach einem Losverfahren, auf das der Teilnehmer wiederum keinen Einfluss hat.

Eine weitere Form, ein Lernverfahren mit Gewinnoption durchzuführen, stellen sogenannte Gewinnspiele dar. Bei einem Gewinnspiel hängt der Erfolg des Teilnehmers einzig von seinen eigenen Fähigkeiten, wie Wissen, Geschicklichkeit, Schnelligkeit oder Leistung ab. Solche Gewinnspiele sind zur Zeit nur einem stark eingeschränkten Kreis von Teilnehmern im Rahmen von Fernseh-Spielshows zugänglich.

Das der Erfindung zugrundeliegende Problem besteht darin, dass die Teilnahme an einem solchen Leistungs-, Wissens- und Schnelligkeits- Gewinnspiel stark beschränkt ist. Außerdem hat der Teilnehmer keinen Einfluss auf die Auswahlkriterien des Veranstalters. Als Folge davon hat der durchschnittliche Teilnehmer, wenn überhaupt, nur wenige Male in seinem Leben die Möglichkeit, an einem solchen Gewinnspiel teilzunehmen. Auf keinen Fall hat der Teilnehmer von sich aus jederzeit aktiv die Möglichkeit, an einem Gewinnspiel teilzunehmen.

Eine Aufgabe der Erfindung ist es daher, ein Verfahren bereitzustellen, das es einer großen Zahl von Mitbenutzern ermöglicht, jederzeit an einem Lernverfahren mit Gewinnoption teilzunehmen, bei dem die Gewinnchance nicht vom Zufall abhängig ist.

Die Aufgabe wird durch ein Verfahren gemäß Anspruch 1 gelöst. Vorteilhafte Ausführungsformen sind Gegenstand der Unteransprüche.

Bei dem Verfahren gemäß der Erfindung werden von einem Server in einer Dateneinheit hinterlegte Fragen ausgewählt. Der Server erstellt anschließend eine Client-Anwendung und übermittelt die Client-Anwendung über ein Datennetz an einen Client, der mit Hilfe des Darstellungscodes eine Darstellung der Fragen mit einer Gruppe von möglichen Antworten generiert. Da die möglichen Antworten vorgegeben sind, ist eine maschinelle Auswertung der vom Benutzer getroffenen Auswahl unter den Antworten möglich. Das Verfahren ermöglicht daher Benutzern orts- und zeitunabhängig an einem interaktiven Lernverfahren mit Gewinnoption teilzunehmen.

Bei einer bevorzugten Ausführungsform der Erfindung wird die Einhaltung eines vom Server vorgegebenen Zeitintervalls von einem im Client ablaufenden Client-Code überwacht. Dadurch ist sichergestellt, daß jeder Benutzer die gleiche Chance beim Beantworten der Frage hat, da auf diese Weise jedem Benutzer das gleiche Zeitintervall zur Beantwortung der Fragen zur Verfügung steht. Anderenfalls wären die Chancen ungleich verteilt, da die Übermittlungszeiten in einem paketorientierten Datennetz, wie dem Internet, unterschiedlich ausfallen können.

Ein Verfahren gemäß einem Aspekt der Erfindung umfasst die Durchführung eines computergestützen Lernverfahrens mit Gewinnoption in einem elektronischen Medium. Der Benutzer baut eine Verbindung zu einer Seite/Domain eines Betreibers eines Lernverfahrens mit Gewinnoption in dem elektronischen Medium auf. Dann führt der Benutzer einen Anmeldevorgang durch. Daraufhin wird dem Benutzer eine personalisierte Homepage dargestellt. Danach nimmt der Benutzer an einem zeitlich begrenzten Frage/Antwort- Lernverfahren teil. Dabei wird der Verlauf des Lernverfahrens protokolliert. Nach Beendigung eines vorbestimmten Zeitraumes werden alle teilnehmenden Benutzer bewertet, eine Rangliste wird erstellt und gespeichert. Schließlich wird ein Gewinn entsprechend der Rangliste an die Benutzer ausgeschüttet.

Dieses Verfahren ermöglicht, da es vorzugsweise im Internet durchgeführt wird, den Teilnehmern, an jedem Ort und zu jeder Zeit an einem Lernverfahren mit Gewinnoption teilzunehmen. Die Anzahl der Mitbenutzer ist bei diesem Verfahren prinzipiell unbegrenzt. Es fallen also sämtliche Teilnahmebeschränkungen, die bisher mit einem Lernverfahren mit Gewinnoption verbunden waren, weg. Es fallen auch sämtliche zeitlichen Beschränkungen weg, da der Betreiber auch mehrere Lernverfahren, die sich zeitlich überschneiden, anbieten kann. Durch die Beliebigkeit der Teilnahme an dem Lernverfahren folgt die zeitliche Begrenzung eines Lernverfahrens im Rahmen von Lernzeiträumen, da ein Lernverfahren sonst nie beendet werden könnte. Der Benutzer kann durch Wahl eines Lernzeitraums bestimmen, gegen wieviele Mitbenutzer er antritt, und damit entscheiden, wie hoch seine Gewinnchancen sind. Dies lässt sich z.B. durch die Teilnahme an unterschiedlichen Lernzeiträumen verwirklichen. Bei kurzen Lernzeiträumen tritt der Benutzer gegen weniger Mitbenutzer an, hat aber auch den Nachteil, dass der zu erwartende Gewinn kleiner ist. Der Teilnehmer kann auch im Urlaub, z.B. von jedem beliebigen Internetcafe aus, an dem Lemverfahren teilnehmen. Der Gewinn des Lernverfahrens hängt dabei nur von seinem eigenen Wissen und der Fähigkeit ab, schnell auf dieses Wissen zugreifen zu können.

Bevorzugt umfasst das Lernverfahren mit Gewinnoption einen Zahlungsvorgang. Dabei wählt der Benutzer einen Zahlungsmodus aus. Daraufhin wählt der Benutzer einen vorgegebenen oder in Grenzen frei wählbaren Einzahlungsbetrags aus und führt einen Zahlungsvorgang auf der Basis des Zahlungsmodus und des Einzahlungsbetrags aus, der daraufhin protokolliert wird.

Durch den Zahlungsvorgang wird eine Gebühr entrichtet. Durch diese Gebühr kann einerseits der Betrieb des Lernverfahrens und andererseits auch die Gewinnsumme finanziert werden.

Bei einem Verfahren zur Durchführung eines computergestützten Lernverfahrens mit Gewinnoption in einem elektronischen Medium gemäß einem anderen Aspekt der Erfindung baut ein Benutzer eine Verbindung mit einem Betreiber eines Lernverfahrens mit Gewinnoption auf einer Seite/Domain in dem elektronischen Medium auf. Dann führt der Benutzer einen Anmeldevorgang durch, woraufhin dem Benutzer eine personalisierte Homepage dargestellt wird. Ausgehend von der personalisierten Homepage kann der Benutzer an einem zeitlich begrenzten und protokollierten Frage-/Antwort-Lernverfahren teilnehmen. Nach dem Abschluss des Lernverfahrens werden dem Benutzer mindestens zwei Bedienfelder dargestellt, wobei das Betätigen des ersten Bedienfeldes dazu führt, dass der Benutzer zu der personalisierten Homepage zurückkehrt. Betätigt der Benutzer das zweite Bedienfeld wird dem Benutzer ein Werbefenster eingeblendet bzw. geöffnet. Danach folgt das Aufstellen bzw. Aktualisieren einer Rangliste entsprechend Regeln des Lernverfahrens. Diese Rangliste bzw. die Position des Benutzers in der Rangliste wird dargestellt. Schließlich wird nach Ablauf der für das Lernverfahren vorgesehenen Lernperiode der Gewinn entsprechend der Rangliste an die Benutzer ausgeschüttet.

Wie dieses Werbefenster genau beschaffen ist, spielt dabei keine Rolle. Es könnte auch möglich sein, die Auswahl vor Beginn des Lernverfahrens durchzuführen und/oder die Werbung während des gesamten Lernverfahrens einzublenden. Die Bedienfelder können z.B. als Buttons ausgeführt werden. Der Inhalt der Bedienfelder oder auch deren Namen liegen dabei nicht fest. Bei der Betätigung eines der weiteren möglichen Bedienfelder werden andere Aktionen/Darstellungen abgerufen.

Bevorzugt wird mit der Auswahl des zweiten Auswahlfeldes ein Zahlungsvorgang durchgeführt.

Das bedeutet, dass ein Sponsor für einen Teilnehmer bezahlt, wenn dieser dazu bereit ist, sich dafür Werbebotschaften darstellen zu lassen. Die Darstellung kann sowohl optisch als auch akustisch sein.

In einer bevorzugten Ausführungsform wird eine (Internet)-Seite/-Domain mit mehreren Bereichen wie "Homepage", "Benutzerdaten-Verwaltung" und "Lernverfahren" verwendet.

Ein bevorzugtes Verfahren sieht vor, auf der Homepage einen Begrüßungstext, den aktuellen Lernzeitraum, die Höhe des letzten Gewinns und weitere Anzeigeinformationen darzustellen.

Die weiteren Anzeigeinformationen können die nächsten Lernzeiträume, die Höhe des zu erwartenden Gewinns eines laufenden Lernverfahrens, die bisher ausbezahlte Gewinnsumme, der höchste Einzelgewinn und/oder eine Bestenliste sein. Damit kann sich der Benutzer über alle für ihn möglicherweise interessanten Themen informieren. Falls die Homepage zu klein sein sollte, kann von der Homepage auch auf entsprechende Seiten zugegriffen werden.

Ein bevorzugtes Verfahren sieht vor, daß der Benutzer wählen kann, in welcher Sprache weitere Seiten angezeigt werden und/oder der Benutzer einen Login-Namen eingeben und/oder zu einer anderen Seite wechseln kann.

Ein bevorzugtes Verfahren, sieht vor, auf den Homepage- Seiten auch Bannerwerbung und/oder aktuelle Hinweise darzustellen.

Vorzugsweise wird das Frage-/Antwort-Lernverfahren nach vorher vom Betreiber festgelegten Regeln durchgeführt.

Damit hat der Betreiber auch die Möglichkeit, den Ablauf des Lernverfahrens gegebenenfalls geänderten Anforderungen anzupassen. Die Regeln für das Lernverfahren betreffen insbesondere die verschiedenen möglichen Abläufe des Lernverfahrens und die Darstellung des Lernverfahrens. Die Regeln betreffen auch die Erstellung der Rangliste und die Verteilung des Gewinns.

Ein bevorzugtes Verfahren sieht vor, dass der Benutzer die Regeln des Lernverfahrens in mindestens einem Dateiformat abrufen kann.

Vorzugsweise wird dem Benutzer eine Möglichkeit eingeräumt, die Regeln des Lernverfahrens anzusehen, oder auf einem Datenträger zu speichern.

Damit kann sich der Benutzer die Regeln des Lernverfahrens herunterladen, und später in Ruhe ansehen ohne dabei Verbindungskosten zu zahlen oder das Netzwerk zu belasten. Ein Dateiformat kann zum Beispiel PDF sein.

Ein bevorzugtes Verfahren sieht vor, die kompletten Regeln des Lernverfahrens auf einer scrollbaren Seite darzustellen.

Damit kann der Benutzer alle Regeln des Lernverfahrens lesen, ohne die Seite wechseln zu müssen.

Ein bevorzugtes Verfahren sieht vor, den Benutzer durch Internetseiten mit einer Auswahl typischer Fragen und Antworten (FAQs) zu informieren.

Eine FAQ ist eine "oft gestellte Frage" bei der der Betreiber davon ausgeht, dass sie einen fiktiven Benutzer interessieren. Diese Fragen werden zusammen mit ihren Antworten auf einer Seite ausgestellt, damit ein interessierter Benutzer seine Fragen vielleicht schon im Vorfeld beantwortet sieht, ohne dass Emails ausgetauscht werden müssen.

Ein bevorzugtes Verfahren ermöglicht es dem Benutzer, Informationen über den Betreiber abzurufen.

Auf dieser Seite kann sich der Betreiber gegenüber Benutzern oder anderen Nutzern des elektronischen Mediums vorstellen. Diese Seite kann z.B. Stellenangebote oder Kleinanzeigen enthalten.

Vorzugsweise kann der Benutzer von der Homepage aus die Emailadresse, Postanschrift, Telephon- und/oder Faxnummer abrufen.

Damit kann Benutzer direkt mit dem Betreiber Kontakt aufnehmen. Dadurch kann sich der Benutzer direkt mit Fragen, Anregungen oder Beschwerden an den Betreiber wenden.

Ein bevorzugtes Verfahren ermöglicht es dem Benutzer, durch eine Mailto-Funktion eine Email zu erstellen, und dem Betreiber zu schicken.

Damit kann der Benutzer schnell und einfach mit dem Betreiber Kontakt aufnehmen, ohne dass ein umständlicher Eingabevorgang für die Emailadresse notwendig ist.

Ein bevorzugtes Verfahren bietet dem Benutzer die allgemeinen Geschäftsbedingungen in mindestens einem Dateiformat zur Ansicht und Speicherung an. Bevorzugt kann der Benutzer durch Interaktion die Anzeigeinformation ansehen und/oder speichern.

Damit kann sich der Benutzer die allgemeinen Geschäftsbedingungen herunterladen, und später in Ruhe ansehen ohne dabei Verbindungskosten zu zahlen oder das Netzwerk zu belasten. Ein Dateiformat kann zum Beispiel PDF sein.

Vorzugsweise enthält das Verfahren auch eine Möglichkeit, die AGBs komplett auf einer scrollbaren Seite darzustellen.

Damit kann der Benutzer die allgemeinen Geschäftsbedingungen lesen, ohne die Seite wechseln zu müssen.

Vorzugsweise erhält der Benutzer die Möglichkeit, die Seite zu wechseln oder dem Betreiber zu bestätigen, dass er die AGBs gelesen und verstanden hat.

Die Bestätigung des Benutzers, die allgemeinen Geschäftsbedingungen (AGBs) gelesen zu haben, kann implementieren, dass der Benutzer die AGBs auch verstanden hat.

In einem bevorzugten Verfahren erkennt der Benutzer mit dem Anmeldevorgang die allgemeinen Geschäftsbedingungen des Betreibers als Grundlage aller Interaktionen zwischen Betreiber und Benutzer an.

Damit kann der Betreiber dem Benutzer Rechtssicherheit garantieren, da der Benutzer jederzeit die rechtlichen Grundlagen des Lernverfahrens lesen kann.

Bevorzugt kann der Benutzer auf der Homepage von einer übergeordneten Seite auf Seiten, in denen Pressetexte und -informationen gespeichert sind, zugreifen, das heißt diese abrufen und speichern und von dort aus andere Seiten aufrufen.

Vorzugsweise kann der Benutzer eine Führung aufrufen, die Aspekte der Homepage und/oder des Lernverfahrens mit Screenshots, Text und Interaktionen erklärt und diese abbrechen oder während dieser andere Seiten aufrufen.

Die Führung dient zur Verdeutlichung des Lernverfahrens und kann unter anderem einen Ablauf des Lernverfahrens in Teilen nachstellen. Die Führung kann sowohl eine Sammlung einzelner Screenshots als auch eine akustisch unterstützte animierte Filmsequenz sein.

Bevorzugt kann der Benutzer kostenfrei und ohne Gewinnchance ein Test-Lernverfahren durchführen, wobei dem Benutzer die Höhe des letzten Gewinns angezeigt und die Möglichkeit gegeben wird, den Anmeldevorgang zu starten und/oder das Test-Lernverfahren abzubrechen.

Das Test-Lernverfahren kann dabei aus einer speziellen Test-Lernverfahren-Datenbank generiert werden. Es ist auch möglich, dass das Test-Lernverfahren so aufgebaut ist, dass zuerst das Test-Lemverfahren abgebrochen werden muss, bevor der Anmeldevorgang gestartet werden kann. Diese beiden Funktionen können auch in einem Bedienfeld zusammengefasst sein.

Vorzugsweise wird der Benutzer sich durch einen Neuanmeldevorgang oder durch einen Wiederanmeldevorgang anmelden.

Vorzugsweise umfasst eine Neuanmeldung dabei mehrere Schritte. In einem Schritt muss der Benutzer mehrere Pflichtfelder mit seinen persönlichen Daten belegen, welche dann gespeichert werden. Ein Pflichtfeld ist ein Feld das der Benutzer auf jeden Fall ausfüllen muss, um eine Neuanmeldung abschließen zu können. Die Pflichtfelder können dabei Geschlecht, Name, Vorname, Geburtsdatum, Straße, Postleitzahl, Ort, Land, Sprache, Emailadresse, Login- Name, Login-Passwort (mit Bestätigung), und eine Sicherheitsabfrage (mit Bestätigung) umfassen. In einem zweiten Schritt werden diese Daten gespeichert. Daraufhin wird eine personalisierte Homepage generiert.

Mit diesen Daten identifiziert sich der Benutzer gegenüber dem Betreiber. Bei diesem Anmeldevorgang erhält der Benutzer einen Login- Namen und ein Passwort, das einen Wiederanmeldevorgang erheblich beschleunigt. Natürlich können noch weitere Plichtfelder abgefragt werden wie z.B. die Telefonnummer des Benutzers, eine Bankverbindung bzw. notwendige Daten für ein Verrechnungsinstitut und weitere Daten. Natürlich können neben den Pflichtfeldern auch Felder vorgesehen sein, die der Benutzer nicht zwingend ausfüllen muss.

Bevorzugt muss der Benutzer vor der Neuanmeldung bestätigen, dass er die Regeln des Lernverfahrens und/oder die AGBs, gelesen hat.

Dies kann z.B. durch ein Betätigungsfeld oder eine Abfrage verwirklicht werden. Dabei kann der Benutzer auch abgefragt werden, ob er zusätzlich weitere Informationen gelesen hat. Eine dieser möglichen Informationen können z.B. Datenschutzbestimmungen sein. Die Bestätigung, dass der Benutzer diese Informationen gelesen hat, kann im einzelnen auch bedeuten, dass der Benutzer bestätigt, dass er die dargestellten Informationen auch verstanden hat oder, dass der Benutzer mit eine Einverständniserklärung abgibt. Die Einverständniserklärung des Benutzers kann dabei die Regeln der Lernverfahrens, die allgemeinen Geschäftsbedingungen, etwaige Datenschutzbestimmungen und/oder weitere Informationen betreffen.

In einem bevorzugten Verfahren werden vom Benutzer zur Erstellung eines demografischen Profils weitere persönliche Daten abgefragt, gespeichert und ausgewertet.

Bei der Erstellung des demografischen Profils kann dabei danach gefragt werden, wie der Benutzter auf das Lernverfahren / den Betreiber aufmerksam geworden ist. Weiterhin kann nach einer Faxnummer, einem Schulabschluß, Beruf oder Position, Hobbys und Interessen des Benutzers gefragt werden. Es können auch weitere demografische Daten abgefragt werden, die hier nicht explizit aufgelistet sind. Die Erfassung dieser Daten kann mit Hilfe von Auswahl und/oder Eingabefeldern erfolgen.

In einem bevorzugten Verfahren verwendet der Betreiber die demografischen Profile der Benutzer zur Verbesserung der Seite/Domain.

In einem bevorzugten Verfahren wird bei einem Wiederanmeldevorgang vom Benutzer eine Benutzerkennung (Nickname bzw. Login-Name) abgefragt, bei dessen Übereinstimmung mit den gespeicherten Daten eine personalisierte Homepage generiert und angezeigt wird.

Bevorzugt wird der Benutzer zur Neueingabe des Nickname, oder zur Neuanmeldung aufgefordert, wenn der Nickname nicht in der Datenbank vorliegt.

Damit kann der Benutzer die Eingabe des Nickname wiederholen, falls er sich getäuscht haben sollte.

Vorzugsweise wird von dem Benutzer während eines Wiederanmeldevorgangs zusätzlich ein Passwort abgefragt. Dazu wird der Benutzer zur Eingabe eines Passworts aufgefordert. Nach der Eingabe des Passwortes durch den Benutzer wird die Übereinstimmung des Passworts mit den gespeicherten Daten abgefragt. Falls das Passwort nicht öfter als vorbestimmt eingegeben wurde, wird der Benutzer zur Neueingabe des Passwortes aufgefordert. Falls das Passwort öfter als vorbestimmt eingegeben wurde, werden von dem Benutzer die kompletten Benutzerdaten inklusive des Passwortes abgefragt. Bei weiterer Fehleingabe wird der komplette Benutzerdatensatz noch einmal abgefragt.

Bevorzugt wird geprüft, ob der Benutzer die aktuellen Versionen der Regeln des Lernverfahrens und der AGBs eingesehen hat, und falls dies nicht der Fall sein sollte, ein Link zu den Regeln des Lernverfahrens und/oder den AGBs generiert.

Diese Abfrage kann natürlich auch bedeuten, dass von dem Benutzer abgefragt wird ob er auch weitere Informationen gelesen hat. Eine dieser möglichen Informationen können z.B. Datenschutzbestimmungen sein. Die Bestätigung, dass der Benutzer diese Informationen gelesen hat, schließt ein, dass der Benutzer bestätigt, dass er die dargestellten Informationen auch verstanden hat. Darüber hinaus kann der Betreiber von dem Benutzer eine Einverständniserklärung des Benutzers mit den Regeln des Lernverfahrens , den allgemeinen Geschäftsbedingungen, und/oder weiteren Informationen bestätigen lassen.

In einem bevorzugten Verfahren wird die personalisierte Homepage nach folgenden Schritten generiert. In einem ersten Schritt wird eine Datenbank mit benutzerspezifischen Daten ausgelesen. In einem zweiten Schritt werden dem Benutzer wenigstens folgende Informationen dargestellt: Name des Benutzers, Datum der letzten Anmeldung, Information zum aktuellen Lernzeitraum, Informationen über den aktuellen Stand des Lernverfahrens und den aktuellen Betrag auf dem virtuellen Konto.

Vorzugsweise wird die Benutzerführung durch weitere Punkte ergänzt. So können Bedienfelder "Lernverfahren Starten", "Stand des Lernverfahrens Einsehen", "Stammdaten des Benutzers Einsehen/Ändern", "Kontostand Einsehen/Ändern", "Mitgliedschaft Beenden", "Logout (Abmelden)" und/oder "Aufrufen einer Anderen Seite" eingeblendet werden.
Laden der Seiten beim Anklicken und Protokollieren vorgenommener Änderungen.

Dabei ist zu beachten, dass der genaue Wortlaut der Bedienfelder nicht wichtig ist, da ja auch verschiedene Versionen des Lernverfahrens mit Gewinnoption in verschiedenen Sprachen geplant sind.

Vorzugsweise wird der Benutzer nach dem Anklicken des Bedienfeldes "Lernverfahren starten" vor Beginn des Lernverfahrens durch Sicherheitsabfragen darauf hingewiesen, dass ein Betrag von seinem Konto abgebucht wird, dass das Lernverfahren beginnt und, dass das Lernverfahren auch bei einer Unterbrechung der Verbindung gewertet wird. Das Lernverfahren beginnt mit der Zustimmung des Benutzers.

Damit wird der Benutzer noch einmal darauf hingewiesen, dass die Teilnahme an dem Lernverfahren mit Kosten verbunden ist. Das Lernverfahren wird auch bei einer Unterbrechung der Verbindung gewertet, wenn die Unterbrechung manuell, technisch oder durch höhere Gewalt verursacht wurde. Der Betreiber hat dabei die Möglichkeit, wenn er selber die Unterbrechung verursacht hat, den Benutzer für seinen Einsatz zu entschädigen. Weitere Einzelheiten hierzu regeln die allgemeinen Geschäftsbedingungen.

In einem bevorzugten Verfahren wird das Frage-/Antwort-Lernverfahren durchgeführt, indem der Benutzer ein Lernverfahren auswählt. Der Betreiber wählt entsprechend den Regeln des Lernverfahrens zuerst einen Fragenkatalog aus, und generiert dann daraus einen Fragenblock. Dem Benutzer wird dann eine Frage aus dem Fragenblock für eine gewisse Zeit angezeigt. Danach oder währenddessen wird die dazugehörige Antwortauswahl auf dem Bildschirm dargestellt. Der Benutzer trifft eine Auswahl zwischen den Antworten durch Interaktion. Die Auswahl wird durch den Benutzer verbindlich zum Betreiber geschickt. Daraufhin wird die nächste Frage des Blocks aufgerufen, bis alle Fragen eines Blocks beantwortet sind. Dann werden alle Antworten des Benutzers automatisch nach einem Richtig/Falsch-Schema bewertet. Aus dem Ergebnis der Bewertung und den Regeln des Lernverfahrens wird abgeleitet, ob der Benutzer das Lernverfahren fortsetzen darf. Falls ja, wird für den Benutzer der nächste Fragenblock erzeugt und weiter nach obigem Muster verfahren.

Wenn der Benutzer das Lernverfahren nicht mehr fortsetzen darf, wird ihm dieses mitgeteilt. Aus der Menge der beantworteten Fragen des Benutzers wird seine Position in einer Rangliste ermittelt und absolut, relativ und/oder gestuft dargestellt. Nach Ablauf einer Lernperiode werden der, oder die Gewinner anhand der Rangliste ermittelt und ab einer vorbestimmten Gewinnhöhe gemäß der Stammdaten benachrichtigt.

Dabei kann zusammen mit der Frage eine Numerierung angezeigt werden, die wievielte Frage des Frageblocks gerade angezeigt wird. Das kann in der Form eines Bruches, als Klartextanzeige oder Graphisch dargestellt sein. Eine ähnliche Anzeige läßt sich natürlich auch für die Fragenblöcke durchführen. Zusammen kann dem Benutzer dabei sowohl die Anzahl der beantworteten Fragen, die Anzahl der beantworteten Fragenblöcke, oder die Position die der Benutzer bezüglich der Rangliste einnimmt dargestellt werden.

Das Zeitfenster mit der die Frage eingeblendet wird kann fest vorgegeben werden oder auch sich der jeweiligen Situation anpassen. Somit kann einerseits die Frage vor dem Einblenden der Antworten wieder ausgeblendet werden. Die Frage kann aber auch bis zum Abschicken der Antwort oder bis zur Beendigung des Fragenblocks eingeblendet bleiben.

Ein bevorzugtes Verfahren beschränkt die Benutzerführung während des Lernverfahrens auf die für die Durchführung des Lernverfahrens relevanten Punkte.

Dadurch wird vor allem bei kostenpflichtigen Lernverfahren dafür gesorgt, dass der Benutzer nicht abgelenkt wird. Es wird dadurch auch verhindert, dass der Benutzer das Lernverfahren unbeabsichtigt unterbricht, bzw. abbricht.

Ein bevorzugtes Verfahren räumt dem Benutzer die Möglichkeit ein, seine Auswahl der Antwort(en) zu ändern, bevor die Auswahl zum Betreiber gesendet wird.

Diese Möglichkeit erlaubt es dem Benutzer eine Fehleingabe zu korrigieren, z.B. dadurch, dass einfach eine neue Auswahl angewählt wird. Es bietet dem Betreiber die Möglichkeit ein Lernverfahren anzubieten, in dem mehr als nur eine der möglichen Antworten richtig sein können.

In einem bevorzugten Verfahren wird die Antwort mit dem Auswählen einer Antwort zum Betreiber gesendet.

Dadurch kann der Benutzer schneller agieren, da er nur einen und nicht zwei verschiedene Bedienfelder wie z.B. Buttons betätigen muss.

Bevorzugt kann zur Beantwortung der Frage ein Zeitlimit gesetzt werden, das bei Ablauf die momentane Auswahl abschickt.

Damit kann der Betreiber die Leistung eines Benutzers bewerten. Wenn ein Benutzer beliebig viel Zeit zur Beantwortung der Frage hat, wird das Lernverfahren uninteressanter. Auch entsteht die Gefahr, dass der Lernzeitraum zu weit ausgedehnt wird.

Vorzugsweise wird der Ablauf des/der Zeitfensters optisch und/oder akustisch dargestellt.

Damit kann der Benutzer explizit darauf hingewiesen werden, dass die Zeit zur Beantwortung begrenzt ist.

Vorzugsweise werden dem Benutzer am Ende eines Fragenblocks alle nicht richtig beantworteten Fragen zusammen mit deren richtigen Antworten dargestellt.

Dabei wird davon ausgegangen, dass sich beim Benutzer ein Lerneffekt einstellt, bei dem davon auszugehen ist, daß der Benutzer das Lernverfahren, und damit auch seine Gewinnchancen durch häufige Teilnahme am Lernverfahren immer weiter verbessert.

Bevorzugt wird die Rangliste am Ende jedes Fragenblocks, jedes Lernverfahrens und/oder jedes Lernzeitraums erstellt und/oder aktualisiert.

In einem bevorzugen Verfahren werden dem Benutzer am Ende eines Fragenblocks, eines Lernverfahrens und/oder durch Interaktion, Informationen über seine momentane Position in der Rangliste und/oder seinen Stand der Teilnahme am Lernverfahren dargestellt.

Damit kann der Benutzer z.B. von der personalisierten Homepage aus seinen momentanen Stand der Teilnahme am Lernverfahren abrufen. Falls der Benutzer an mehreren Lernverfahrenn teilgenommen hat, kann er natürlich auch mehrere Stände abrufen.

Vorzugsweise kann der Benutzer das Lernverfahren zwischen den einzelnen Fragen, und/oder zwischen den einzelnen Frageblöcken unterbrechen.

Das zielt dabei besonders auf kleine Pausen ab. Längere Pausen würden den Ablauf des Lernverfahrens stören. Die Pausen sind nur nach Beendigung einer Frage und/oder eines Frageblockes sinnvoll und können zeitlich begrenzt sein.

Vorzugsweise kann der Benutzer auf der personalisierten Homepage Informationen über einen oder mehrere Lernzeiträume abrufen. Dabei kann sich der Benutzer über die Dauer, Kosten und zu erwartende Gewinnhöhe, die Anzahl richtig beantworteter Fragen bzw. Frageblöcke und/oder Informationen zu seiner momentanen Position in einer Rangliste informieren und sich diese darstellen lassen.

In einem bevorzugten Verfahren kann der Benutzer seine Stammdaten aktualisieren. Dabei ruft der Benutzer seine Stammdaten auf und ändert diese. Danach werden dem Benutzer die alten und neuen Stammdaten nebeneinander dargestellt, und der Benutzer kann die Änderung bestätigen oder abbrechen. Nach dem Protokollieren der Änderungen werden die neuen Stammdaten und das Protokoll gespeichert.

In einem bevorzugten Verfahren werden die in dem Verfahren verwendeten Daten in vier verschiedenen Datenbanken verwaltet.

Diese können im einzelnen Benutzerdaten, Fragendaten, Loggdaten und interne Daten verwalten.

Vorzugsweise werden Fragenblöcke aus verschiedenen Fragenkatalogen generiert.

Diese Fragenkataloge können nach verschiedenen Themengebieten, (sozio-) kulturellen oder sprachlichen Merkmalen sortiert sein. Die Fragenkataloge können auch nach verschiedenen Schwierigkeitsgraden sortiert sein.

In einem bevorzugten Verfahren wird die Rangliste nach der Anzahl der richtigen Antworten in Folge und/oder der Anzahl der richtigen Antworten während eines Zeitraums bestimmt.

Vorzugsweise berücksichtigt die Rangliste auch die zeitliche Reihenfolge.

Es sind dabei auch Kombinationen denkbar, wobei die Rangliste z.B. immer von dem angeführt wird, der zuerst die meisten Fragen beantwortet hat.

In einem bevorzugten Verfahren sind auch Benutzer im Rahmen einer öffentlichen oder öffentlich übertragenen Veranstaltung zugelassen.

Insbesondere sind dabei Fernsehveranstaltungen gemeint, bei denen Benutzer im Studio gegen Benutzer aus dem Internet antreten (TV-Lernverfahren). Eine weitere Anwendung sind z.B. Lernterminals, die bei Veranstaltungen aufgestellt werden.

Vorzugsweise werden mehreren Benutzern gleichzeitig dieselben Fragen gestellt.

Dies gilt besonders für die Durchführung eines TV-Lernverfahrens, bei dem durch gleiche Fragen eine höhere Chancengleichheit erreicht werden kann.

In einem bevorzugten Verfahren wird das Lernverfahren solange weitergeführt, bis ein einziger Gewinner feststeht.

Dadurch soll zum Beispiel ein TV-Lernverfahren spannender bleiben und verhindert werden, daß alle Benutzer im Studio mit den selben Gewinnen das Lernverfahren beenden.

In einem bevorzugten Verfahren setzt sich der Gewinn aus einem Teil der Einzahlungen der laufenden Runde, einem Teil der Einzahlungen mehrerer Runden und/oder den Einzahlungen eines Sponsors zusammen.

Damit ist die Finanzierung des Gewinns von Standard-Lernverfahrenen, Jackpot-Lernverfahren und Sonderlernverfahrenen gemeint. Der genaue Name der Lernverfahren ist noch nicht festgelegt. Er kann besonderen Gegebenheiten angepasst werden. So könnten z.B. die Lernverfahren eventuell den Namen mindestens eines Sponsors im Titel tragen.

So ist es z.B. möglich, steigende Gewinne mit steigender Antwortzahl einzuführen, um einen vorher festgelegten Betrag einzusetzen, oder um den Anreiz zu erhöhen. So sind z.B. Sonder-Lernverfahren denkbar die von einem einzigen Sponsor finanziert werden. Prinzipiell ist die Aufteilung so gedacht, dass die Standard-Lernverfahren durch die laufenden Einnahmen des laufenden Standard-Lernverfahrens finanziert werden. Jackpot-Lernverfahren werden zusätzlich aus den Einnahmen mehrerer Lernverfahren finanziert. Sonder-Lernverfahren können durch einen Sponsor finanziert werden. Mischformen sind dabei natürlich auch geplant. Weiterhin sind Varianten denkbar, bei der jeweils die Person einen Gewinn erhält, die über mehrere Lernverfahren die meisten Fragen beantwortet. Damit kann z.B. eine Bestenliste mit Preisen dotiert werden. Dies ist besonders interessant, da damit auch einfache Lernverfahren mit sehr vielen Einzelfragen große Gewinnsummen versprechen. Es ist auch möglich karitative Lernverfahren durch zuführen. Dies bedeutet, dass nur um einen Teil der Gewinnsumme ausgeschüttet wird, der Rest der Gewinnsumme aber an eine karitative Einrichtung gespendet wird.

In einem bevorzugten Verfahren werden länderunspezifische Fragenkataloge verwendet und Anzeigeinformationen in mindestens einer Weltsprache angeboten.

Da das Internet international ist, sollte es auch von einem internationalen Benutzer-Klientel benutzt werden können. Dazu ist es notwendig, die Benutzerführung in mindestens einer der Weltsprachen anzubieten. Um den internationalen Benutzern wenigstens eine gewisse Chancengleichheit einzuräumen, sollten auch die entsprechenden Fragenkataloge einem internationalen Wissensstandard angepasst sein.

In einer bevorzugten Ausführungsform des Verfahrens werden die gezeigten Inhalte in mindestens einer Landessprache dargestellt.

Bevorzugt werden zur Generation der Fragenblöcke länderspezifische Fragenkataloge verwendet.

Damit wird erreicht, dass dem Betreiber mehr Fragen zur Verfügung stehen.

Bevorzugt kann der Benutzer das Lernverfahren mit der Tastatur und/oder der Maus des Endgeräts bedienen. Damit soll auf die persönliche Präferenz des Benutzers bezüglich der Bedienung des Lernverfahrens Rücksicht genommen werden.

Dabei können Tastatur und Maus jeweils auch durch die folgenden Eingabemittel wie: Joystick, Trackball, Touch-, Writepad, Datenhandschuh oder andere denkbare Eingabegeräte ersetzt werden.

Ein bevorzugtes Verfahren sieht vor, dass Einzahlungen des Benutzers durch ein virtuelles Konto bei dem Betreiber verwaltet werden.

Dadurch werden der Verwaltungsaufwand und die -kosten minimiert. Der Benutzer zahlt dabei einen realen Geldbetrag auf sein virtuelles Konto ein, das nur dazu verwendet werden kann, eine Gebühr zu entrichten. Der Benutzer hat hierbei die Möglichkeit, von jedem beliebigen Internetzugang aus an dem Lernverfahren teilzunehmen, auch wenn dieser über keine Möglichkeit verfügt, Einzahlungen vorzunehmen. Die Währung des Kontos ist dabei unbestimmt, und kann eine reale oder eine virtuelle Währung darstellen. Virtuelle Währungen können entweder mit einem Wechselkurs an eine reale Währung gekoppelt werden, oder von anderen Währungen völlig unabhängig sein. Eine virtuelle Währung kann z.B. auch den Gegenwert eines Lernverfahrens darstellen. Der Name der Währung des Kontos ist dabei nicht festgelegt, und kann Ticket, Token, Nugget oder ähnlich heißen. Die Verwendung von Tickets oder ähnlichen Gegenwerten haben den Vorteil, dass sei mit einer Gültigkeitsdauer versehen werden können. Damit lassen sich alle Probleme die sich bei der Auflösung des Benutzerkontos ergeben können umgehen. Kleine Restbeträge müssen nicht wieder an den Benutzer zurückgezahlt werden, sondern verfallen einfach. Da das virtuelle Konto nur für die Teilnahme an dem Lernverfahren verwendet werden soll, ist eine Obergrenze für Einzahlungen denkbar, die nur durch Gewinne überschritten werden kann.

Vorzugsweise sind Einzahlungen auf das virtuelle Konto durch Einzugsermächtigung, Überweisung, Kredit-, EC- und/oder Geldkarte, Bargeld und/oder Paybox möglich.

Einzahlungen auf das virtuelle Konto können dabei klassisch durch Überweisung, durch andere Verfahren wie Kredit-, EC- oder Geldkarte (E-Cash), bei geeigneten Endgeräten auch durch direkte Einzahlung von Bargeld oder durch andere denkbare Einzahlungswege vorgenommen werden. Dabei könnte der Benutzer und/oder der Betreiber die Art und die Anzahl der akzeptierten Zahlungsarten einschränken.

Vorzugsweise wird der Gewinn entsprechend eines gewinnhöhenabhängigen Schlüssel ausbezahlt.

Durch den Schlüssel wird bei besonders kleinen Gewinnen vermieden, dass der Gewinn durch Überweisungsgebühren signifikant verringert wird. Der Schlüssel entscheidet, ob der Gewinn auf dem virtuellen oder realen Konto gutgeschrieben wird, oder der Benutzer entscheiden kann, wie mit dem Gewinn verfahren wird. Es ist z.B. bei Sonder-Lernverfahren auch vorgesehen, den Gewinnbetrag in bar auszuzahlen. Der Gewinn kann auch durch Schecks oder ähnliche Verfahren ausgezahlt werden. Der Gewinn kann aber auch aus Sachpreisen bestehen, die dann auf anderen Wege dem Gewinner zugeführt werden.

Ein bevorzugtes Verfahren erlaubt es dem Benutzer, gegen falsche, mehrdeutige oder unlogische Fragen Einspruch einzulegen und deren Löschung oder Stillegung zu veranlassen.

Dadurch erhält der Benutzer eine Chance die Qualität der Fragen und Antworten laufend zu verbessern. Allein die große Anzahl der Mitbenutzer wird verhindern, dass sich falsche Fragen lange in dem System halten können. Ebenso ist es denkbar Suchprämien für fehlerhafte Fragen auszuschreiben.

Vorzugsweise erhält der Betreiber die Möglichkeit, einen Lernzeitraum oder einzelne Lernverfahren nicht zu werten und den Einzahlungsbetrag zurückzuerstatten.

Damit kann der Betreiber den Benutzer für selbstverschuldete Fehler entschädigen. Für gefundene falsche Fragen kann z.B. ein Preisgeld in Form von z.B. freien Lernrunden ausgesetzt werden.

Bevorzugt kann der Betreiber einem oder mehreren Benutzern Gratis-Lernverfahren einräumen.

Damit können z.B. besonders treue Benutzer bedacht werden oder es ermöglicht ein Rabattsystem, bei dem Benutzern bei hohen Einzahlungen auf die virtuellen Konten ein besonders günstiger Wechselkurs eingeräumt wird.

Vorzugsweise werden einzelne Daten bei einem Anmeldevorgang automatisch ermittelt.

Dies kann bedeuten, dass vor allem Benutzer, die immer denselben Computer / das selbe Eingabegerät zur Teilnahme am Lernverfahren verwenden, automatisch erkannt werden können. Für eine Version des Lernverfahrens die mit mobilen Kommunikationsgeräten durchgeführt wird kann dies z.B. durch das Auslesen eines Subscriber Identification Module (Sim-Card) geschehen. In diesem Fall legitimiert sich der Benutzer nur gegenüber seinem Eingabegerät. Dies ist auch z.B. durch eine maschinenlesbare Seriennummer des Hauptprozessors möglich. Ein anderes mögliches Verfahren zur Benutzeridentifikation ist dabei die Verwendung von "Cookies". Andere verschlüsselte Benutzeridentifikationssysteme sind ebenfalls möglich. Sollte ein fälschungssicheres Identifikationssystem für ein elektronisches Medium gefunden werden, so kann es den Anmeldevorgang grundlegend ändern, bzw. überflüssig machen.

Vorzugsweise kann der Benutzer und/oder der Betreiber eine Mitgliedschaft beenden, wobei die Gültigkeit des Nickname und des Passworts, erlischt.

Dadurch verliert der Benutzer das Zugriffsrecht auf sein virtuelles Konto. Die Löschung der Gültigkeit von Nickname und Passwort schließt nicht automatisch die Löschung der Stammdaten mit ein. So können z.B. die Stammdaten von Benutzern gespeichert bleiben, die versuchten, das Lernverfahren zu manipulieren, um deren Neuanmeldung zu verhindern. Ein eventuelles Restguthaben auf dem virtuellen Benutzerkonto ist vom Betreiber in geeigneter Weise zu verwenden. Entweder verfällt der Betrag nach einer gewissen Zeit oder wird an den Benutzer zurück überwiesen. Der Betreiber hat außerdem die Möglichkeit für jeden verfallenen Kontoinhalt einen festgelegten Prozentsatz des Gegenwertes an eine karitative Einrichtung zu spenden.

In einem bevorzugten Verfahren werden wichtige Daten wie Stammdaten, Bankverbindungen, Nicknames, Fragen und Antworten nach mindestens einem Verfahren verschlüsselt und/oder codiert versendet verarbeitet und/ oder gespeichert.

Bevorzugt hat der Benutzer bei Verlust seines Nicknames und/oder seines Passwortes mindestens eine Möglichkeit, diese vom Betreiber nach einem bestimmten Verfahren wieder zu erlangen.

Dies kann entweder mit Hilfe des elektronischen Mediums oder eines anderen Kommunikationsmediums wie z.B. entweder per Brief oder telefonisch geschehen. Dabei kann sich der Benutzer durch Übermitteln eines vorher hinterlegten schlüsselartigen Codes identifizieren.

Gegenstand der Erfindung ist auch ein Computerprogramm, das das erfindungsgemäße Verfahren umsetzt sowie ein dieses Programm enthaltender Datenträger.

Weitere Vorteile, Merkmale und Anwendungsmöglichkeiten der Erfindung ergeben sich aus der nachfolgenden Beschreibung eines bevorzugten Ausführungsbeispiels in Verbindung mit der Zeichnung.
Fig. 1 zeigt ein Ausführungsbeispiel des erfindungsgemäßen Lernverfahrens mit Gewinnoption aus Sicht des Betreibers.
Fig.2 zeigt den Verlauf aus Sicht des Benutzers.
Fig.3 zeigt die Verwendung der Fragenblöcke.
Fig.4 zeigt die Schritte beim Stellen und Beantworten einer Frage.
Fig.5 zeigt den Verlauf eines Wiederanmeldevorgangs.
Fig. 6 zeigt ein Blockdiagramm eines Daten- und Softwarearchitektur.

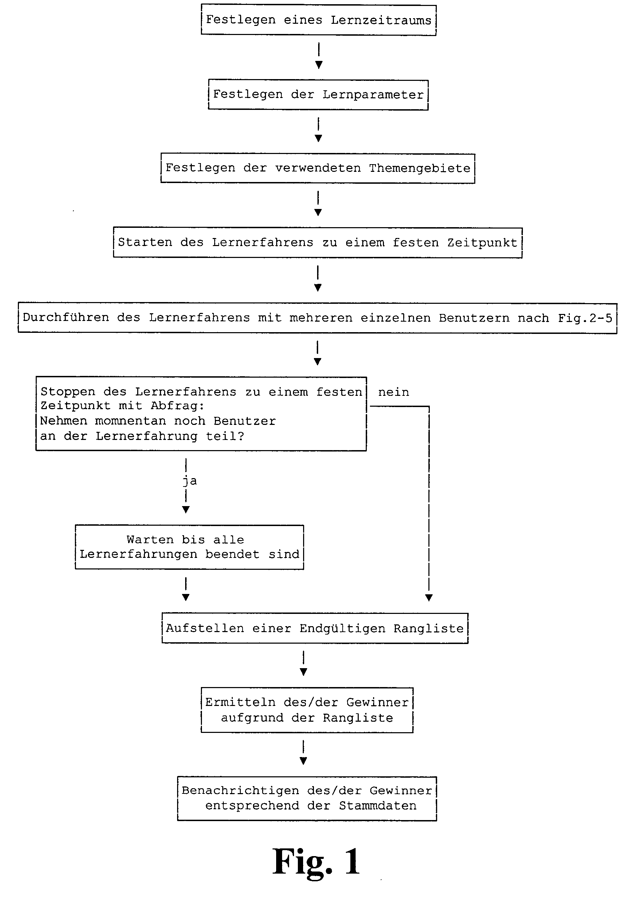

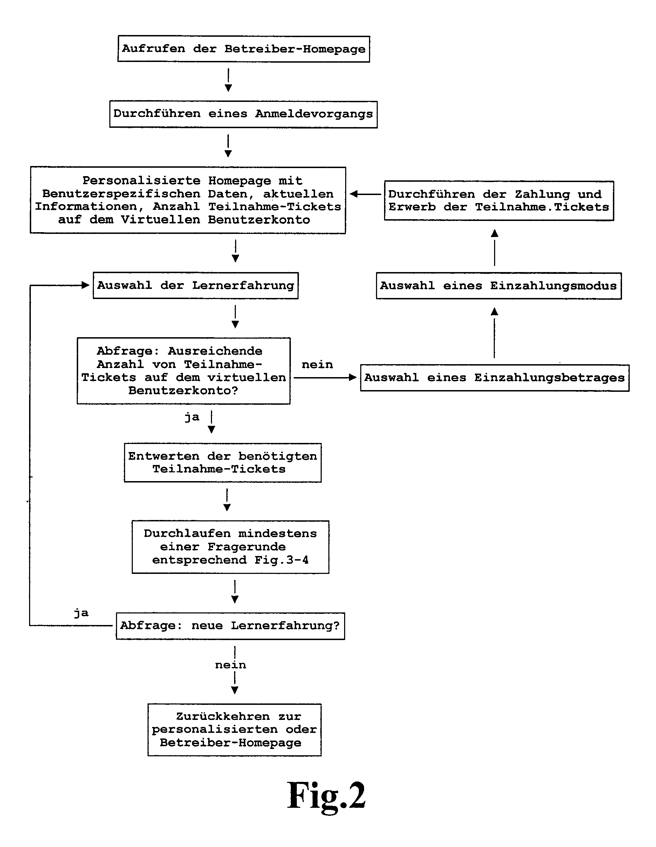

Das in Fig 1 dargestellte Ablauf- oder Flussdiagramm zeigt den gesamten Ablauf eines Lernverfahrens aus Sicht des Betreibers. Vor Beginn eines Lernverfahrens muss der Betreiber den Zeitraum und die Art des Lernverfahrens, sowie die verwendeten Fragenkataloge festlegen. Dabei bestimmt der Betreiber, welche Fragenkataloge zum Lernverfahren herangezogen werden, wie sich die spätere Gewinnsumme zusammensetzt und auf welche Weise der oder die Gewinner bestimmt werden. Ein Lernzeitraum beginnt und endet an einem bestimmten Datum zu einer bestimmten Uhrzeit. Zwischen Beginn und Ende eines Lernzeitraumes können Benutzer einzelne Benutzer-Lernverfahren (im weiteren als Lernverfahren bezeichnet) durchführen, deren Ablauf unter Fig.2-4 näher erläutert ist. Lernverfahren können bis zum Ende des Lernzeitraums begonnen und auch über das Ende des Lernzeitraumes hinaus noch zu Ende geführt werden. Nachdem alle Lernverfahren eines Lernzeitraumes beendet sind, wird eine endgültige Rangliste aufgestellt. Entsprechend dieser Rangliste werden der oder die Gewinner ermittelt, informiert und der Gewinn ausgezahlt.

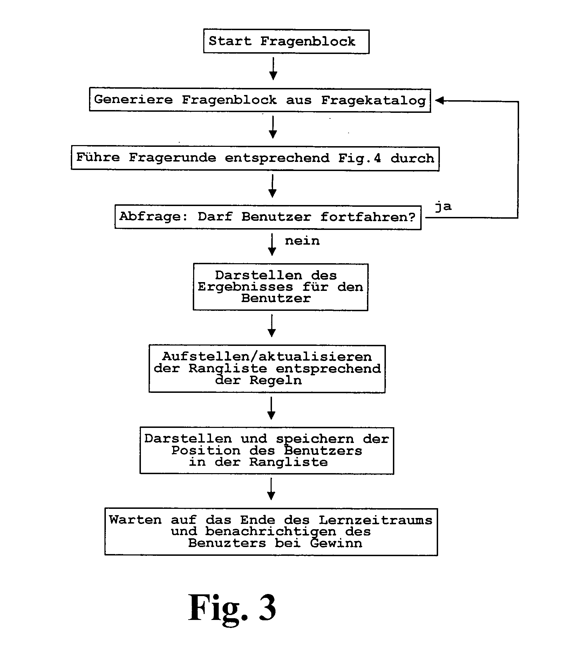

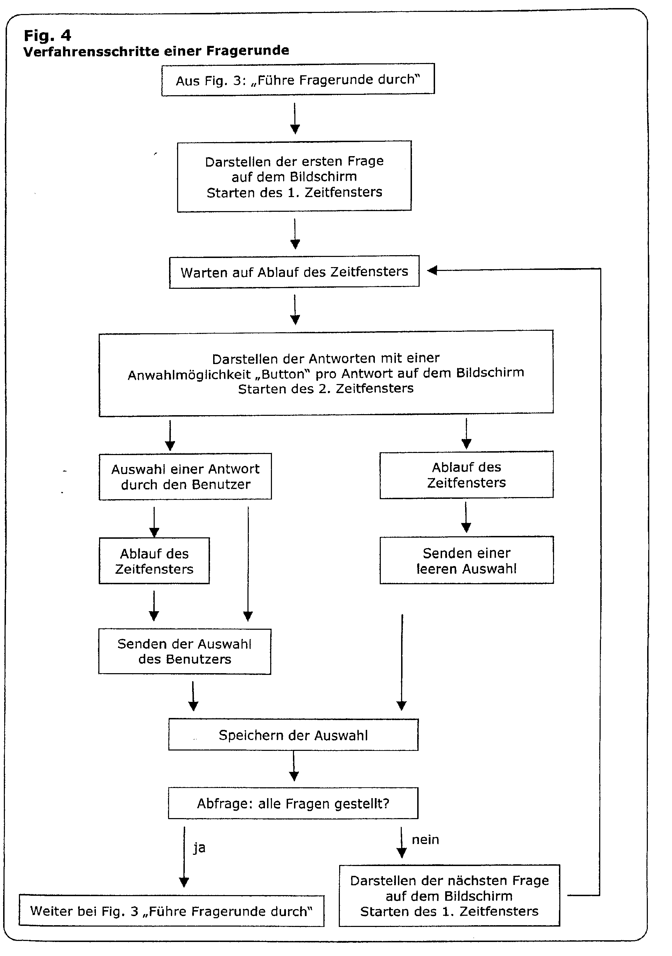

Das in Fig.2 dargestellte Ablaufdiagramm zeigt einen möglichen Verlauf aus Sicht des Benutzers. Der Benutzer ruft dabei im Internet die Homepage des Betreibers auf und führt einen Anmeldevorgang durch. Nach dem Anmeldevorgang wird dem Benutzer eine personalisierte Homepage dargestellt. Zum Starten des Lernverfahrens wählt der Benutzer ein Bedienfeld "Lernverfahren starten" auf der personalisierten Homepage aus. Daraufhin wird eine Seite generiert, auf der der Benutzer die Art des Lernverfahrens bzw. die Lernperiode auswählen kann. Vor dem eigentlichen Beginn des Lernverfahrens wird kontrolliert, ob der Kontostand des virtuellen Kontos des Benutzers eine Teilnahme an dem Lernverfahren erlaubt. Erlaubt der Kontostand des virtuellen Kontos des Benutzers keine Teilnahme, wählt der Benutzer einen Zahlungsmodus und einen Zahlungsbetrag aus. Mit der Zahlung wird das virtuelle Konto des Benutzers wieder aufgefüllt. Darauf hin kann der Benutzer wieder ein Lernverfahren auswählen. Erlaubt der Kontostand des virtuellen Kontos des Benutzers die Teilnahme, wird ein virtueller Gegenwert für die Teilnahme des Benutzers an dem Lernverfahren von dem virtuellen Konto abgebucht. Mit der Abbuchung startet der Benutzer das eigentliche Lernverfahren. Das Lernverfahren ist ein Frage/Antwort-Lernverfahren, dessen Durchführung in Fig. 3-4 erläutert ist. Nach dem Beenden des Lernverfahrens wird eine Seite dargestellt, die zwei Bedienfelder enthält: "Neues Lernverfahren" und "Lernverfahren beenden". Bei Betätigung des Bedienfeldes "Neues Lernverfahren" wird die Seite generiert, auf der der Benutzer die Art des Lernverfahrens bzw. der Lernzeit auswählen kann. Bei Betätigung des Bedienfeldes "Lernverfahren beenden" wird dem Benutzer wieder die personalisierte Homepage dargestellt.

Das in Fig.3 dargestellte Ablaufdiagramm zeigt die Verwendung der Fragenblöcke. Der Betreiber generiert mit dem Start des Lernverfahrens einen Fragenblock aus einem Fragenkatalog. Die erste Frage wird dann dem Benutzer zugeschickt. Diese Frage wird dann nach dem in Fig.4 dargestellten Schema beantwortet. Die ausgewählte Antwort schickt der Benutzer dann zurück zum Betreiber. Dann schickt der Betreiber die nächste Frage, und fährt fort bis alle Fragen des Fragenblocks beantwortet sind. Dabei werden am Ende jedes Fragenblocks alle Antworten nach einem richtig/falsch-Schema bewertet. Nach der Bewertung wird entsprechend den Regeln der laufenden Runde entschieden, ob der Benutzer das Lernverfahren fortsetzen darf oder nicht. Darf der Benutzer das Lernverfahren fortsetzen, wird der nächste Fragenblock generiert. Mit diesem wird wieder so wie vorstehend beschrieben verfahren. Darf der Benutzer das Lernverfahren nicht mehr fortsetzen, wird dies dem Benutzer angezeigt. Danach wird die Rangliste entsprechend der Regeln aktualisiert und gespeichert. Dann wird dem Benutzer dargestellt, wieweit die Spitze der Rangliste, in Frageblöcken ausgedrückt, entfernt ist oder ob der Benutzer die Rangliste anführt. Dem Benutzer wird dann wieder die personalisierte Homepage dargestellt. Die Rangliste wird am Ende des Lernzeitraums ausgewertet. Der oder die Gewinner werden am Ende des Lernzeitraums benachrichtigt.

Das in Fig.4 dargestellte Flussdiagramm beschreibt, wie eine Fragerunde, die einen Frageblock enthält, durchgeführt wird. Mit dem ersten Fragenblock wird dem Benutzer auch gleichzeitig die erste Frage auf dem Bildschirm dargestellt. Damit der Benutzer nicht die Möglichkeit hat, die Frage solange angezeigt zu lassen, bis er die Lösung durch Nachschlagen oder Erfragen herausfinden kann, wird nach einer gewissen Zeit eine Antwortauswahl zusammen mit einer Auswahlmöglichkeit (z.B. eines Buttons) dargestellt. Mit der Darstellung der Antworten wird ein Zeitfenster geöffnet. Nun markiert der Benutzer durch Betätigen der Tastatur oder eines Buttons eine der Antworten. Falls der Benutzer sich geirrt haben sollte, kann er seine Auswahl durch markieren einer zweiten Antwort ändern. Danach kann der Benutzer die markierte Antwort an den Betreiber versenden. Die Anzeige der Antworten ist durch das Zeitfenster zeitlich begrenzt. Mit Ablauf des Zeitfensters wird automatisch die markierte Auswahl abgeschickt. Sollte zu diesem Zeitpunkt keine Auswahl markiert sein, führt dies zum Abschicken einer leeren, und somit falschen Auswahl an den Betreiber. Der Betreiber speichert die Auswahl. Sind noch unbeantwortete Fragen im Fragenblock, wird die nächste Frage nach den hier beschriebenen Schritten bearbeitet, sonst wird zu dem in Fig.3 dargestellten Verfahren zurückgekehrt.

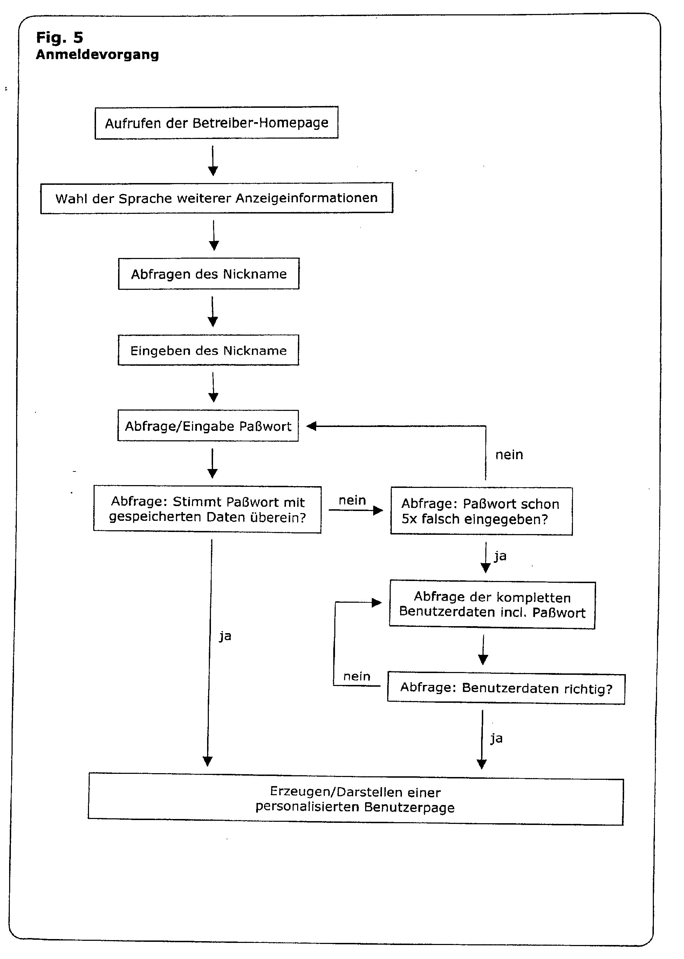

Das in Fig.5 dargestellte Ablaufdiagramm beschreibt in Einzelschritten einen Wiederanmeldevorgang. Nachdem der Benutzer die Homepage des Betreibers aufgerufen hat, wählt er zuerst die Sprache, in der weitere Anzeigeinformationen dargestellt werden. Dann fragt das System einen Nickname ab. Der Benutzer gibt den Nickname ein, den er bei einer früheren Neuanmeldung gewählt hat. Dann fragt das System den Benutzer nach seinem Passwort. Bei der Eingabe des Passworts hat der Benutzer mehrmals z.B. fünfmal die Möglichkeit zur Neueingabe, wenn das Passwort nicht zu dem in der "logs"- Datei gespeicherten passt. Bei einer erneuten Fehleingabe werden die kompletten Benutzerdaten einschließlich des Passworts abgefragt. Dieser Vorgang wird wiederholt, bis entweder ein zusammenpassendes Nickname/Passwort- Paar oder die kompletten Benutzerdaten eingegeben wurden. Dann wird aus den, in der Benutzerdaten-Datei gespeicherten, Stammdaten des Benutzers eine personalisierte Homepage erzeugt. Von dieser Homepage aus kann der Benutzer dann das eigentliche Lernverfahren, wie in Fig.2-4 dargestellt, starten.

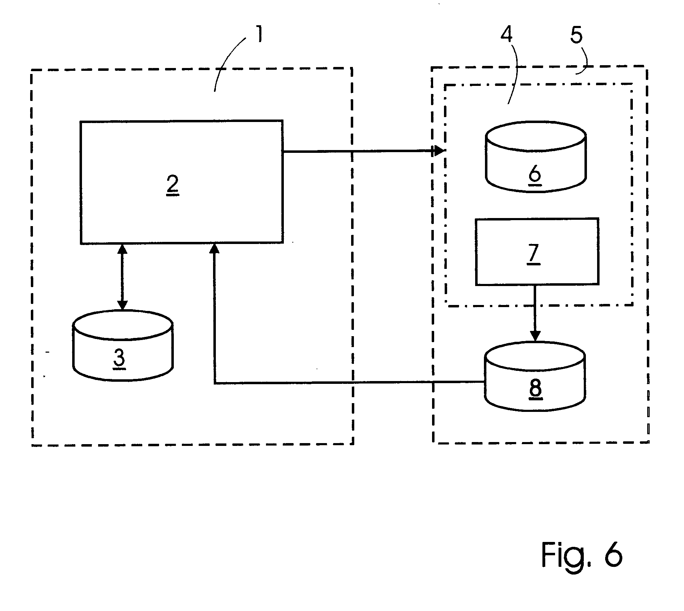

In Fig. 6 ist schließlich ein Blockdiagramm der Daten- und Softwarearchitektur dargestellt. Auf einer Datenverarbeitungsanlage 1 ist ein Server 2 implementiert, der Zugang zu einer Dateneinheit 3 hat. Die Dateneinheit 3 muß nicht notwendigerweise physikalisch ein Bestandteil der Datenverarbeitungsanlage 1 sein. Bei der Dateneinheit 3 kann es sich um Dateien handeln, die im ASCII-, HTML- oder XML-Format abgespeichert sind oder auch um Daten, die für den Server 2 über Anwendungsschnittstellen (API), Pipes, oder sonstige Kommunikationsprotokolle zugänglich sind. Die Dateneinheit 3 kann auch mehrere über verschiedene Datenträger verteilte Datenspeicher umfassen. In der Dateneinheit 3 sind die Fragen enthalten, die der Server 2 für die Benutzer auswählt. Auf der Grundlage der ausgewählten Fragen, erstellt der Server 2 eine Client-Anwendung 4 in einem für den Client 5 interpretierbaren Format. Falls es sich bei dem Client 5 um einen Internet-Browser handelt, kann die Client-Anwendung 4 im HTML-Format erzeugt werden. Die Client-Anwendung 4 wird vom Server 2 über ein Datennetz dem Client 5 übermittelt. Die Client-Anwendung enthält neben Darstellungsdaten 6 auch ablauffähigen Client-Code 7. Bei dem Client-Code 7 kann es sich zum Beispiel um Javascript oder Java-Applets handeln. Der Client-Code 7 sorgt dafür, dass ein vom Server 2 vorgegebenes Zeitintervall zu Beantwortung der Fragen vom Benutzer eingehalten wird. Außerdem übermittelt der Client-Code 7 Antwortdaten 8 über das Datennetz zurück an den Server 2, der die Antwortdaten hinsichtlich ihrer Übereinstimmung mit den in den Fragedaten 3 enthaltenen Antworten überprüft.

Grundsätzlich braucht der Client-Code 7 zur Überwachung der Zeitlimits nur einmal an den Client 5 übermittelt werden. Das aktuelle Zeitlimit kann dann dem Client-Code 5 zusammen mit den jeweils aktuellen Fragedaten im Rahmen des Darstellungscode 6 übermittelt werden.

Der Server 2 kann daneben auch weitere in Fig. 6 nicht dargestellte Aufgaben übernehmen. Insbesondere kann er das Zeitmanagement für die Runden des Lernverfahrens übernehmen, während deren die Benutzer an dem Frage-Antwort-Lernverfahren teilnehmen können. Außerdem kann der Server 2 aufgrund der Antwortdaten 8 eine Rangliste erstellen und die Ausschüttung des Gewinns an die Benutzer veranlassen.

Weitere Aufgabe des Servers 2 betreffen die Durchführung des Anmeldevorgangs, die Abwicklung der Zahlungen der Gebühren, die Darstellung der Ergebnisse für den Benutzer, die Darstellung der Regeln des Lernverfahrens und allgemein die Benutzerführung vor und nach einer Fragerunde. Zu diesem Zweck werden jeweils Client-Anwendungen oder Darstellungsdaten, beispielsweise im HTML-Format, erzeugt und an den Client übermittelt, der mit Hilfe der Client-Anwendung und der Darstellungsdaten auf einem Datensichtgerät eine entsprechende Darstellung generiert. Mit Hilfe des im Client 5 ablauffähigen Codes werden dann auf der Grundlage der Reaktionen des Benutzers Antwortdaten generiert und an den Server 2 zurücksendet.

Abschließend sei darauf hingewiesen, daß die hier verwendeten Begriffe Server und Client nicht notwendigerweise physikalische Einheiten bezeichnen. Vielmehr sind damit logische Einheiten gemeint, die in Software implementiert und über mehrere physikalischen Einheiten verteilt sein können.

## Patentansprüche

1. Verfahren zur Durchführung eines interaktiven Lernverfahrens, mit den Verfahrensschritten:
- Auswahl einer Frage durch einen Server (2) aus dem Server zugänglichen Fragedaten (3);
- Erzeugen einer Client-Anwendung (4) für einen Client (5) durch den Server (2) , nach deren Ausführung im Client (5) die Frage durch einen Benutzer durch Auswahl unter mehreren angebotenen Antworten beantwortbar ist;
- Übermittlung der Client-Anwendung (4) vom Server (2) über ein Datennetz an den Client (5); und
- Vergleich der vom Client (5) in der Client-Anwendung (4) übermittelten Antwortdaten (8) mit einem in den Fragedaten (3) abgelegten Sollergebnis durch den Server (2).

2. Verfahren nach Anspruch 1,
bei dem die Frage vom Benutzer innerhalb eines vom Server (2) vorgegebenen Zeitintervalls beantwortbar ist, dessen Einhaltung von einem im Client (5) ausgeführten Client-Code (7) überwacht wird.

3. Verfahren nach Anspruch 1 oder 2,
bei dem vom Server (2) folgende Verfahrensschritte durchgeführt werden:
- Aufbauen einer Verbindung zu einem Client (5) eines Benutzers;
- Erzeugen einer Client-Anwendung zum Darstellen einer personalisierten Homepage durch den Client (5);
- Übermittlung der Client-Anwendung für die personalisierte Homepage an den Client (5) eines Benutzers und Durchführen eines Anmeldevorgangs;
- Übermittlung von Fragen an Clients (5) verschiedener Benutzers während eines vorbestimmten Zeitraums zur Durchführung des Lernverfahrens;
- Protokollieren der von jedem Client (5) übermittelten Antwortdaten (8);
- Bewerten der Antwortendaten (8) aller in einem vorbestimmten Zeitraum teilnehmenden Benutzer und Aufstellen einer Rangliste;
- Abspeichern der Rangliste;
- Veranlassung einer Gewinnausschüttung an die Benutzer auf Basis der Rangliste.

4. Verfahren nach Anspruch 3,
bei dem vom Server (2) folgende weitere Verfahrensschritte durchgeführt werden:
- Übermitteln einer Client-Anwendung für die Auswahl eines Zahlungsmodus durch den Benutzer und für die Auswahl eines vorgegebenen oder in Grenzen frei wählbaren Einzahlungsbetrags durch den Benutzer;
- Durchführen eines Zahlungsvorgangs auf der Basis des Zahlungsmodus und des Einzahlungsbetrags;
- Protokollieren des Zahlungsvorgangs.

5. Verfahren nach Anspruch 1 oder 2,
mit den vom Server (2) durchgeführten Verfahrensschritten:
- Aufbauen einer Verbindung zu einem Client (5) eines Benutzers;
- Durchführen eines Anmeldevorgangs;
- Erzeugen und Übermitteln einer Client-Anwendung für eine personalisierte Homepage;
- Übermittlung von Darstellungsdaten (6) bezüglich Fragen an Clients (5) verschiedener Benutzer während eines vorbestimmten Zeitraums für die Durchführung des Lernverfahrens;
- Protokollieren des Ablaufs des Lernverfahrens;
- Erzeugen und Übermittlung von Darstellungsdaten für mindestens zwei Bedienfelder, wobei bei Betätigung des ersten Bedienfeldes zur personalisierten Homepage zurückgekehrt wird und bei Betätigung des zweiten Bedienfeldes ein Werbefenster eingeblendet/geöffnet wird;
- Erzeugen und Übermitteln von Darstellungsdaten für Ergebnisse des Benutzer;
- Aufstellen/Aktualisieren einer Rangliste entsprechend den Regeln des Lernverfahrens;
- Erzeugen und Übermitteln von Darstellungsdaten an den Client (5) zur Darstellung der Position des Benutzers in der Rangliste und Abspeichern der Position des Benutzers;
- Veranlassen einer Gewinnausschüttung an die Benutzer auf der Basis der Rangliste;

6. Verfahren nach Anspruch 5,
bei dem durch die Auswahl des zweiten Bedienfeldes ein Zahlungsvorgang im Server (2) durchgeführt wird.

7. Verfahren nach einem der vorgenannten Ansprüche,
wobei der Anmeldevorgang entweder als ein Neuanmeldevorgang oder ein Wiederanmeldevorgang durchgeführt wird.

8. Verfahren nach einem der vorhergehenden Ansprüche,
wobei vom Server (2) an den Client (5) übermittelte Client-Anwendungen eine Benutzerführung durchführen, die durch mindestens einen der folgenden Punkte ergänzt ist:
- Lernverfahren Starten;
- Stand des Lernverfahrens Einsehen;
- Stammdaten des Benutzers Einsehen/Ändern;
- Kontostand Einsehen/Ändern;
- Mitgliedschaft Beenden;
- Logout (Abmelden) und/oder
- Aufrufen einer anderen Seite
- Laden der Seiten beim Anklicken und Protokollieren vorgenommener Änderungen.

9. Verfahren nach einem der vorhergehenden Ansprüche,
wobei die vom Server (2) übermittelten Client-Anwendungen ein Lernverfahren durch folgende Schritte starten:
- Anklicken des Links "Lernverfahren starten" innerhalb der personalisierten Homepage;
- Sicherheitsabfrage mit Hinweis, dass der Gegenwert bei Zustimmung abgebucht wird;
- Sicherheitsabfrage mit Hinweis, dass eine Runde des Lernverfahrens beginnt;
- Sicherheitsabfrage mit Hinweis, dass die Runde des Lernverfahrens bei Unterbrechung trotzdem gewertet wird;
- Beginn einer Runde des Lernverfahrens bei Zustimmung des Benutzers.

10. Verfahren nach Anspruch 9,
bei dem das Lernverfahren nach folgenden Schritten durchgeführt wird:
- Übermitteln einer Client-Anwendung für die Auswahl eines Lernverfahrens durch den Benutzer;
- Generieren eines Fragenblocks entsprechend dem ausgewählten Lernverfahren durch den Server (2);
- Erzeugen und Übermitteln von Darstellungsdaten (6) zum Einblenden einer Frage für eine vorbestimmte Zeit auf dem Client (5);
- Erzeugen und Übermitteln von Darstellungsdaten (6) zum Einblenden der Antwortauswahl;
- Empfang der vom Benutzer getroffenen Auswahl;
- Aufrufen der nächsten Frage, bis alle Fragen des Frageblocks beantwortet sind;
- Bewerten der Antwortdaten (8) nach Richtig/Falsch;
- Protokollieren der richtigen/falschen Antworten;
- Entscheiden, nach den Regeln der laufenden Lernperiode für das Lernverfahren, ob der Benutzer das Lernverfahren fortsetzen darf oder nicht;
- Generieren des nächsten Frageblocks, falls der Benutzer mit dem Lernverfahren fortfahren darf, und Fortsetzung des Lernverfahrens wie oben;
- Übermitteln von Darstellungsdaten für die Entscheidung, dass für den Benutzer das Lernverfahren beendet ist, wenn der Benutzer das Lernverfahren nicht mehr fortsetzen darf;
- Erstellen/Aktualisieren einer Rangliste entsprechend den Regeln der laufenden Lernperiode, falls der Benutzer das Lernverfahren nicht fortsetzen darf;
- Verteilen der Gewinnsumme entsprechend der Rangliste und Benachrichtigen des/der Gewinner entsprechend den Stammdaten nach Ablauf der laufenden Lernperiode.

11. Verfahren nach einem der vorhergehenden Ansprüche,
wobei am Ende des Fragenblocks alle nicht richtig beantworteten Fragen und deren richtige Antworten dargestellt werden.

12. Verfahren nach einem der Ansprüche 1 bis 9,
wobei die Rangliste nach jedem absolvierten Fragenblock und/oder am Ende jeder Runde erstellt/aktualisiert wird.

13. Verfahren nach Anspruch 10,
wobei am Ende des Fragenblocks und/oder am Ende jeder Runde dem Benutzer Informationen über seine Position im Vergleich zur Spitze der Rangliste dargestellt werden.

14. Verfahren nach einem der vorgenannten Ansprüche, wobei sich der angekündigte Gewinn aus verschiedenen Quellen zusammensetzt, nämlich
- einem Teil der Einzahlungen der laufenden Lernperiode des Lernverfahrens,
- einem Teil der Einzahlungen mehrerer Lernperioden des Lernverfahrens, und/oder
- einem Teil der Einzahlungen anderer Quellen.

15. Computerprogramm, **dadurch gekennzeichnet, dass** es Befehle enthält, bei deren Ausführung ein Verfahren gemäß einem der Ansprüche 1 bis 14 durchgeführt wird.

16. Datenträger, **dadurch gekennzeichnet, dass** er ein Programm gemäß Anspruch 15 enthält.
